# EUROPÄISCHE PATENTSCHRIFT

(11) **EP 1 807 292 B1**
(45) Veröffentlichungstag und Bekanntmachung des Hinweises auf die Patenterteilung: **05.11.2008**
(21) Anmeldenummer: 05803392.9
(22) Anmeldetag: 28.10.2005
(51) Int. Cl.: B60T 7/12, B60T 8/40, B60T 8/32

(54) **VERFAHREN ZUM BETRIEB EINER MITTELS FREMDKRAFT BETÄTIGBAREN FESTSTELLBREMSE**
METHOD FOR OPERATING A PARKING BRAKE THAT CAN BE ACTUATED BY MEANS OF AN EXTERNAL FORCE
PROCEDE POUR FAIRE FONCTIONNER UN FREIN DE STATIONNEMENT ACTIONNE PAR UNE FORCE EXTERIEURE

(30) Priorität: 29.10.2004 DE 102004052960; 11.08.2005 DE 102005037965
(43) Veröffentlichungstag der Anmeldung: 18.07.2007
(73) Patentinhaber: Continental Teves AG & Co. oHG, 60488 Frankfurt am Main (DE)
(72) Erfinder: KLUSEMANN, Rainer, 60529 Frankfurt am Main (DE); STASTNY, Karel, 85055 Ingolstadt (DE); HINN, Mirco, 35396 Giessen (DE); PAGEL, Klaus, Dieter, 64293 Darmstadt (DE)
(86) Internationale Anmeldenummer: PCT/EP2005/055633
(87) Internationale Veröffentlichungsnummer: WO 2006/045841

(56) Entgegenhaltungen:
- EP-A- 1 008 503
- WO-A-00/76818
- DE-B3- 10 324 446
- US-A1- 2003 222 498

## Beschreibung

Die vorliegende Erfindung betrifft ein Verfahren zum Betrieb einer mittels Fremdkraft betätigbaren Feststellbremse für Kraftfahrzeuge mit einem mit einem mechanischen Schaltgetriebe versehenen Antriebsmotor, die im wesentlichen aus einem Bedienelement, einer elektronischen Steuereinheit, der Raddrehzahlwerte von Raddrehzahlsensoren zugeführt werden, mindestens eine Einheit zur Erzeugung einer Zuspannkraft sowie mit durch die Einheit zuspannbaren Bremseinrichtungen an wenigstens einer Achse gebildet wird, wobei die elektronische Steuereinheit die Einheit nach Erkennen eines Anfahrvorganges des Kraftfahrzeugs im Sinne eines Lösevorganges der Feststellbremse ansteuert.

Aus der DE 103 24 446 B3 ist ein Verfahren zur Steuerung eines mit einer elektrischen Feststellbremse ausgestatteten Bremssystems bekannt. Bei dem vorbekannten Verfahren wird mit Hilfe eines Kupplungspedalwegsensors eine erste Zeitspanne vom Beginn des Einkuppelvorgangs bis zu einem Kupplungsansprechzeitpunkt, der dem sogenannten Kupplungsschleifpunkt entspricht, ermittelt. Der Zeitpunkt zur Durchführung eines Lösevorganges der elektrischen Feststellbremse wird um eine zweite Zeitspanne vor dem Kupplungsansprechzeitpunkt gewählt. Das bedeutet, dass die Feststellbremse in Abhängigkeit der Signale des Kupplungspedalwegsensors gelöst wird. Zur Sicherheit kann zusätzlich ein Ganginformationssensor eingesetzt werden, mit dessen Signalen festgestellt wird, ob der Fahrzeugführer einen Gang eingelegt hat. Wird auf einen Ganginformationssensor verzichtet, kann die Erkennung des Anfahrvorganges fehlerhaft sein und es kann nach einem Lösevorgang der Feststellbremse zu sicherheitskritischen Situationen kommen, was als weniger vorteilhaft anzusehen ist.

Es ist daher Aufgabe der vorliegenden Erfindung ein Verfahren weiter zu entwickeln, das auch bei fälschlicherweise durchgeführten Lösevorgängen eine größtmögliche Sicherheit bietet und das Kraftfahrzeug in einen sicheren Zustand überführt.

Diese Aufgabe wird verfahrensmäßig dadurch gelöst, dass die Steuereinheit die Einheit nach dem Lösen der Feststellbremse im Sinne einer Erhöhung der Zuspannkraft ansteuert, falls die Erkennung des Anfahrvorganges als fehlerhaft eingestuft wurde.

Dabei ist vorgesehen, dass die Erkennung des Anfahrvorganges als fehlerhaft eingestuft wird, falls der Fahrzeugführer für eine vorbestimmte Zeitspanne nach dem Lösevorgang der Feststellbremse keine Betätigung der Pedale vornimmt und das Kraftfahrzeug eine Geschwindigkeit von vorzugsweise weniger als 3 km/h aufweist.

Bei einer weiteren, besonders vorteilhaften Weiterbildung des erfindungsgemäßen Verfahrens ist vorgesehen, dass die Erkennung des Anfahrvorganges als fehlerhaft eingestuft wird, falls der Fahrzeugführer für eine vorbestimmte Zeitspanne nach dem Lösevorgang der Feststellbremse keine Betätigung der Pedale vornimmt und ein Sensor ermittelt, dass die Fahrzeugführertür des Kraftfahrzeugs geöffnet wird.

Außerdem ist vorgesehen, dass die Erkennung des Anfahrvorganges als fehlerhaft eingestuft wird, falls der Fahrzeugführer für eine vorbestimmte Zeitspanne nach dem Lösevorgang der Feststellbremse keine Betätigung der Pedale vornimmt und ein Sensor an einem Sicherheitsgurtschloss ermittelt, dass der Fahrzeugführer seinen Sicherheitsgurt geöffnet hat.

Bei einer weiteren vorteilhaften Weiterbildung des erfindungsgemäßen Verfahrens ist vorgesehen, dass die Erkennung des Anfahrvorganges als fehlerhaft eingestuft wird, falls das Kraftfahrzeug eine Geschwindigkeit von vorzugsweise weniger als 3 km/h aufweist und der Fahrzeugführer die Zündung abschaltet.

Die Geschwindigkeit des Kraftfahrzeugs wird mit Hilfe der Raddrehzahlsensoren bestimmt.

Außerdem ist vorgesehen, dass die vorbestimmte Zeitspanne variabel ist und in Abhängigkeit der Hangneigung bestimmt wird. Dabei wird die Hangneigung mit Hilfe eines Sensors zur Neigungserkennung ermittelt.

Die Erfindung wird nachfolgend anhand eines Ausführungsbeispiels im Zusammenhang mit der beiliegenden Zeichnung näher erläutert. In der Zeichnung zeigen:
- Fig. 1: ein schematisch dargestelltes Schaltbild eines hydraulischen Bremssystems, das eine elektromechanische Einheit zur Durchführung von Feststellbremsvorgängen aufweist und an der das erfindungsgemäße Verfahren durchführbar ist;
- Fig. 2: ein Flussdiagramm zur Erkennung eines Anfahrvorganges und anschließender Ansteuerung für einen Lösevorgang der Feststellbremse;
- Fig. 3a: ein zeitliches Ablaufdiagramm eines automatischen Lösevorgangs bei fehlerhafter Erkennung des Anfahrvorganges und anschließender Erhöhung der Zuspannkraft.

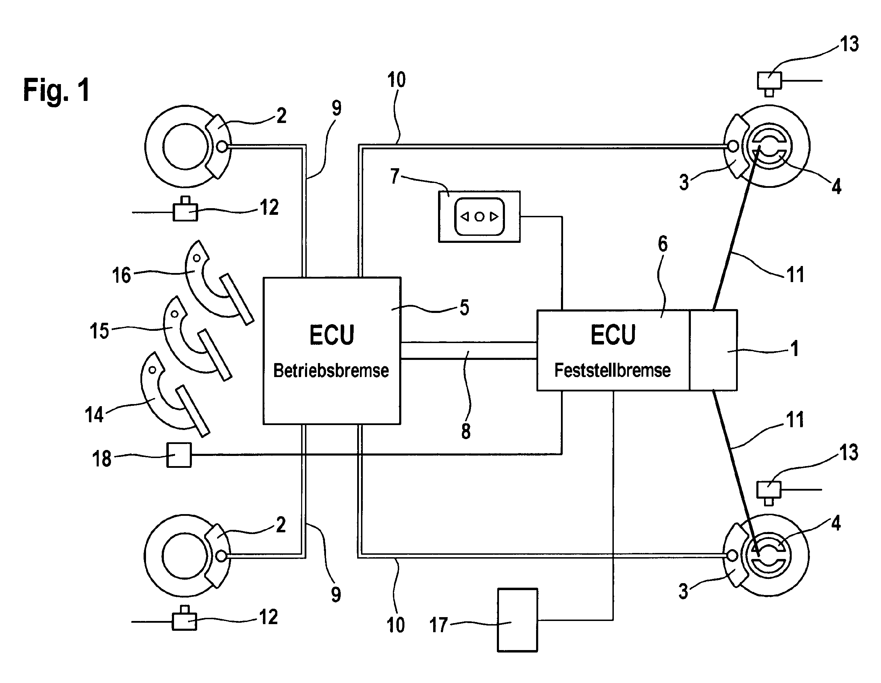

In Fig. 1 ist ein Schaltbild einer hydraulischen Bremsanlage schematisch dargestellt. Die hydraulische Bremsanlage weist an einer ersten Achse, der Vorderachse, Radbremsen 2 auf, die während Betriebsbremsungen über eine hydraulische Leitung 9 mit Druck beaufschlagbar sind. Zur Kontrolle der gewünschten Bremsverzögerung und zur Realisierung einer Blockierschutz-Regelung sowie zur Detektierung der Fahrzeuggeschwindigkeit sind den Rädern der Vorderachse Raddrehzahlsensoren 12 zugeordnet, deren Ausgangssignale einer elektronischen Steuer- und Regeleinheit (ECU) 5 zugeführt werden. Diese elektronische Steuer- und Regeleinheit 5 ist dem Betriebsbremssystem zugeordnet. An einer zweiten Achse, der Hinterachse, sind ebenfalls Radbremsen 3 vorgesehen, die während Betriebsbremsungen über eine zweite hydraulische Leitung 10 mit Druck beaufschlagbar sind. Die Raddrehzahlen der Räder der Hinterachse werden durch Raddrehzahlsensoren 13 ermittelt und der eben erwähnten elektronischen Steuer- und Regeleinheit 5 zugeführt. Außerdem weisen die Räder der Hinterachse neben den Radbremsen 3 für Betriebsbremsungen auch eine elektromechanisch betätigbare Feststellbremse auf. Die elektromechanisch betätigbare Feststellbremse umfasst zwei verriegelbare Bremseinrichtungen 4, die als Trommelbremsen 4 mit jeweils einem nicht näher dargestellten Spreizschloss ausgebildet sind. Das eben genannte Spreizschloss ist mittels eines Kabelzugs 11 von einer elektromechanischen Stelleinheit 1 betätigbar, wonach die Trommelbremsen 4 zugespannt werden. Ein Feststellbremsvorgang wird nach der Betätigung eines Bedienelementes 7 durch den Fahrzeugführer durchgeführt. Dabei werden die Ausgangssignale des Bedienelementes 7 einer der elektromechanischen Feststellbremse zugeordneten elektronischen Steuereinheit (ECU) 6 zugeführt, die die bereits erwähnte elektromechanische Stelleinheit 1 entsprechend ansteuert. Die eben genannte elektronische Steuereinheit 6 sowie die dem Betriebsbremssystem zugeordnete elektronische Steuer- und Regeleinheit 5 kommunizieren miteinander über eine Datenleitung 8, die beispielsweise als CAN-Verbindung ausgebildet ist.

In Fig. 1 sind zusätzlich schematisch ein Kupplungspedal 14, ein Betriebsbremspedal 15 und ein Fahrpedal 16 sowie ein den Kupplungspedalweg ermittelnden Kupplungspedalwegsensor 18 dargestellt. Außerdem werden die Ausgangssignale eines die Hangneigung bestimmenden Sensors zur Neigungserkennung 17 der der Feststellbremse zugeordneten Steuereinheit 6 zugeführt. Der Zweck der genannten Sensoren wird später näher erläutert.

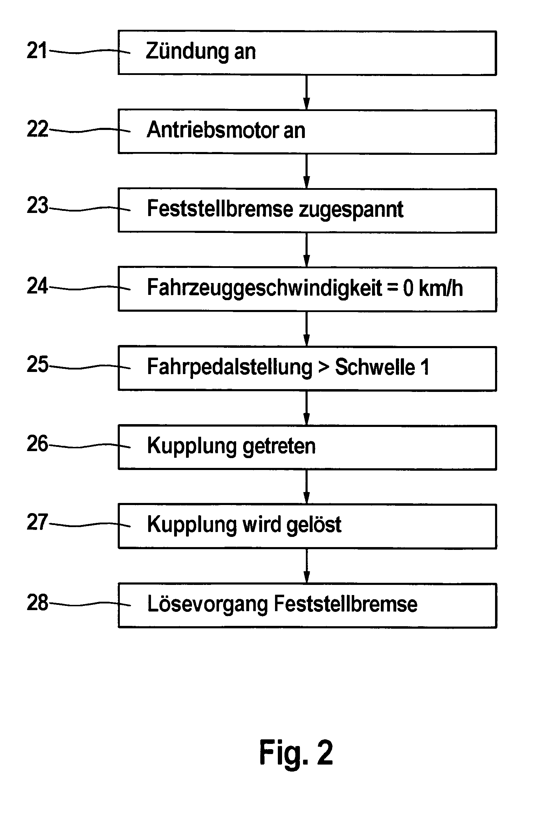

In Fig. 2 ist ein Flussdiagramm zur Erkennung eines Anfahrvorganges des Kraftfahrzeugs dargestellt, wobei die der Feststellbremse zugeordnete Steuereinheit 6 die Stelleinheit 1 nach Erkennung eines Anfahrvorgangs im Sinne eines Lösevorgangs der Feststellbremse ansteuert. Zur Erkennung eines Anfahrvorganges wird im Verfahrensschritt 21 zunächst über eine nicht dargestellte Signalleitung zum nicht dargestellten Zündschloss des Kraftfahrzeugs überprüft, ob die Zündung des Kraftfahrzeugs aktiviert ist. Falls die Zündung aktiviert ist, wird vorbehaltlich der nachfolgenden Verfahrensschritte angenommen, dass das Kraftfahrzeug in Bewegung gesetzt werden soll. Zu diesem Zweck wird zusätzlich im Verfahrensschritt 22 geprüft, ob sich der Antriebsmotor im Betriebsmodus befindet. Anschließend wird überprüft, ob die Feststellbremse zugespannt ist (Verfahrensschritt 23). Im nächsten Verfahrensschritt 24 zur Erkennung des Anfahrvorganges wird mit Hilfe der anhand von Fig. 1 erwähnten Raddrehzahlsensoren 12, 13 festgestellt, ob sich das Kraftfahrzeug im Stillstand befindet. Anschließend wird die Stellung des Gas- bzw. Fahrpedals 16 ermittelt, das für die Erkennung des Anfahrvorganges vom Fahrzeugführer stärker betätigt werden muss als eine vorbestimmte Schwelle (Verfahrensschritt 25). Durch die Auswertung der Signale des Kupplungspedalwegsensors 18 wird im Verfahrensschritt 26 ermittelt, ob der Fahrzeugführer das Kupplungspedal 14 getreten hat. Sofern der Fahrzeugführer das Kupplungspedal 14 aus der eben erwähnten, getretenen Position löst, ist in Verbindung mit den eben erwähnten Bedingungen ein Anfahrvorgang des Kraftfahrzeugs erkannt und die anhand von Fig. 1 erwähnte Steuereinheit 6 steuert die Stelleinheit 1 im Sinne eines Lösevorganges der Feststellbremse an (Verfahrensschritte 27, 28).

Da der Fahrzeugführer die eben beschriebenen Bedingungen auch unbeabsichtigt erfüllen kann, d.h. ohne dass der Fahrzeugführer einen Anfahrvorgang des Kraftfahrzeugs beabsichtigt, kann es zu einem vom Fahrzeugführer ungewollten Lösevorgang der Feststellbremse kommen. Die vorliegende Erfindung sieht deshalb vor, dass die Steuereinheit 6 die Stelleinheit 1 nach dem Lösen der Feststellbremse im Sinne einer Erhöhung der Zuspannkraft ansteuert, falls der Lösevorgang vom Fahrzeugführer unbeabsichtigt erfolgt ist. Mit anderen Worten, falls die Erkennung des Anfahrvorganges fehlerhaft war, worauf ein Lösevorgang der Feststellbremse fälschlicherweise durchgeführt wurde, wird die Feststellbremse wieder zugespannt.

Die Erkennung des Anfahrvorganges des Kraftfahrzeugs wird dabei als fehlerhaft eingestuft, falls der Fahrzeugführer für eine vorbestimmte Zeitspanne Δt nach dem Lösevorgang der Feststellbremse weder das Kupplungspedal 14, noch das Betriebsbremspedal 15 und auch nicht das Fahrpedal 16 betätigt und das Kraftfahrzeug eine Geschwindigkeit von weniger als 3 km/h aufweist. Da der Fahrzeugführer für die vorbestimmte Zeitspanne Δt nach dem Lösevorgang keines der Pedale 14, 15, 16 betätigt und das Kraftfahrzeug sich nahezu im Stillstand befindet geht man davon aus, dass der Lösevorgang der Feststellbremse vom Fahrzeugführer nicht beabsichtigt wurde.

Damit das ungebremst bewegliche Kraftfahrzeug nicht zu einem Sicherheitsrisiko für andere Verkehrsteilnehmer wird, ist die eben erwähnte, vorbestimmte Zeitspanne Δt variabel und wird in Abhängigkeit von der Hangneigung bestimmt. Zu diesem Zweck wird der bereits erwähnte Sensor zur Neigungserkennung 17 verwendet.

Falls der Fahrzeugführer für eine vorbestimmte Zeitspanne Δt nach dem Lösevorgang der Feststellbremse keines der Pedale 14, 15, 16 betätigt und ein nicht dargestellter Sensor ermittelt, dass die Tür des Fahrzeugführers geöffnet wird, geht man ebenfalls davon aus, dass der Lösevorgang der Feststellbremse vom Fahrzeugführer ungewollt durchgeführt wurde bzw. dass die Erkennung des Anfahrvorganges des Kraftfahrzeugs fehlerhaft war. In diesem Fall wird wie bereits erwähnt die anhand von Fig. 1 beschriebene elektromechanische Stelleinheit 1 zur Erzeugung einer Zuspannkraft im Sinne einer Erhöhung der Zuspannkraft angesteuert und das Kraftfahrzeug sicher gehalten.

Eine weitere Kombination von Merkmalen, die darauf schließen lassen, dass die Erkennung des Anfahrvorganges des Kraftfahrzeugs fehlerhaft war, besteht darin, dass der Fahrzeugführer für eine vorbestimmte Zeitspanne Δt keines der Pedale 14, 15, 16 betätigt und ein nicht dargestellter Sensor an einem Sicherheitsgurtschloss ermittelt, dass der Fahrzeugführer seinen Sicherheitsgurt geöffnet hat. Diese Merkmalskombination weist ebenfalls darauf hin, dass der Fahrzeugführer keinen Lösevorgang der Feststellbremse beabsichtigt hat, woraufhin die Feststellbremse wieder zugespannt wird.

Falls sich das Kraftfahrzeug nahezu im Stillstand befindet, das heißt eine Geschwindigkeit von weniger als 3 km/h aufweist und der Fahrzeugführer die Zündung des Antriebsmotors abschaltet wird ebenfalls davon ausgegangen, dass ein zuvor erfolgter Lösevorgang vom Fahrzeugführer unbeabsichtigt durchgeführt wurde. Wie bereits erwähnt, wird deshalb die Erkennung des Anfahrvorganges des Kraftfahrzeugs als fehlerhaft eingestuft und die Feststellbremse wieder zugespannt.

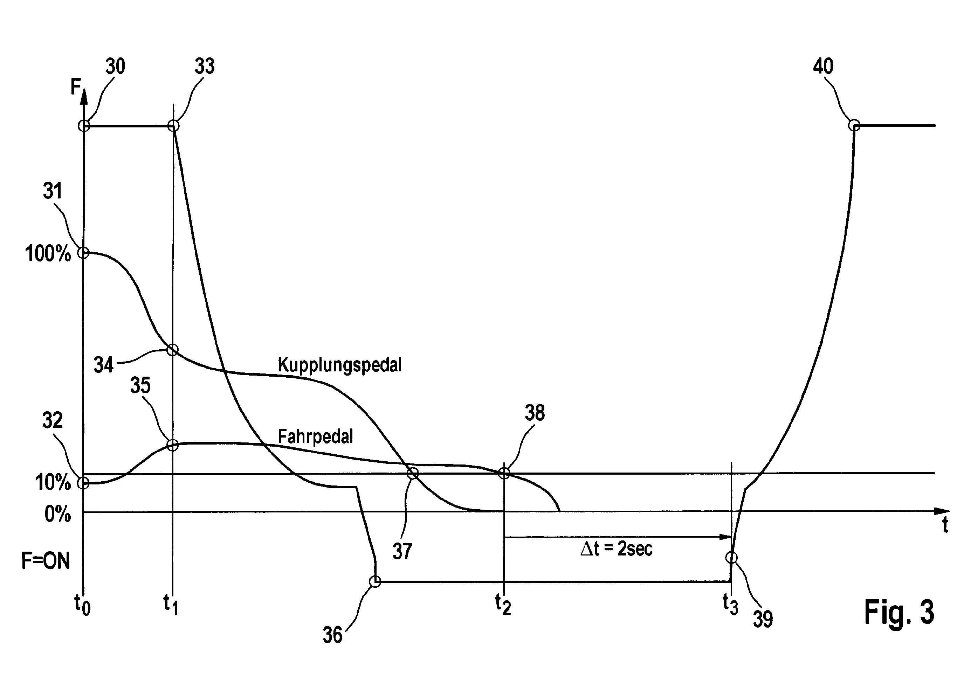

In Fig. 3 ist ein zeitliches Ablaufdiagramm eines automatischen Lösevorgangs der Feststellbremse bei zuvor fehlerhafter Erkennung des Anfahrvorganges und anschließender Erhöhung der Zuspannkraft dargestellt. Auf der Ordinate ist die von der anhand von Fig. 1 erwähnten Stelleinheit 1 erzeugte Zuspannkraft F dargestellt. Außerdem ist auf der Ordinate der Betätigungszustand des Kupplungspedals 14 und des Fahrpedals 16 dargestellt. Zum Zeitpunkt t₀ ist die Feststellbremse zugespannt (Position 30) und das Kupplungspedal 14 ist vollständig betätigt bzw. vollständig getreten, wie es Position 31 verdeutlicht. Gleichzeitig ist das Fahrpedal nicht betätigt (Position 32). Das Nicht-Betätigen der Pedale 14, 15, 16 im Sinne der vorliegenden Erfindung umfasst auch ein geringfügiges Betätigen von weniger als z.B. 10% ihres maximalen Betätigungsweges. Die Betätigung des Betriebsbremspedals 15 ist der Übersichtlichkeit halber in Fig. 3 nicht dargestellt und es wird davon ausgegangen, dass das Betriebsbremspedal 15 unbetätigt bleibt. Außerdem beträgt die Geschwindigkeit des Kraftfahrzeugs während des gesamten in Fig. 3 dargestellten Zeitverlaufs weniger als 3 km/h.

Zum Zeitpunkt t₁ sind die anhand von Fig. 2 erwähnten Bedingungen zum automatischen Lösen der Feststellbremse erreicht: Die Zündung des Kraftfahrzeugs ist an, der Antriebsmotor läuft und die Feststellbremse ist zugespannt. Die Geschwindigkeit des Kraftfahrzeugs beträgt 0 km/h und das Fahrpedal 16 wird stärker betätigt als eine vorbestimmte Schwelle (Position 35). Außerdem führt der Fahrzeugführer das Kupplungspedal 14 aus dem vollständig getretenen Zustand heraus (Position 34) und die elektromechanische Stelleinheit 1 wird im Sinne eines Lösevorgangs angesteuert (Position 33). Nach einer Zeitspanne, die der benötigten Lösezeit der Feststellbremse entspricht, ist die Feststellbremse vollständig gelöst (Position 36).

Wie Fig. 3 verdeutlicht, führt der Fahrzeugführer das Kupplungspedal 14 in den unbetätigten Zustand (Position 37). Ein Betätigen von weniger als z.B. 10 % des maximalen Betätigungsweges wird dabei zum unbetätigten Zustand gezählt. Zum Zeitpunkt t₂ betätigt der Fahrzeugführer auch das Fahrpedal 16 nicht mehr (Position 38). Zum Zeitpunkt t₃ wird davon ausgegangen, dass die Erkennung des Anfahrvorganges fehlerhaft war bzw. dass der automatische Lösevorgang der Feststellbremse vom Fahrzeugführer unbeabsichtigt war, da der Fahrzeugführer für eine vorbestimmte Zeitspanne Δt keine Betätigung der Pedale 14, 15, 16 vorgenommen hat und das Kraftfahrzeug eine Geschwindigkeit von weniger als 3 km/h aufweist. Die Stelleinheit 1 wird also im Sinne einer Erhöhung der Zuspannkraft F angesteuert (Position 39), wonach die Feststellbremse wieder zugespannt wird (Position 40).

## Patentansprüche

1. Verfahren zum Betrieb einer mittels Fremdkraft betätigbaren Feststellbremse für Kraftfahrzeuge mit einem mit einem mechanischen Schaltgetriebe versehenen Antriebsmotor und einem Kupplungspedal (14), einem Fahrpedal (16) und ein Betriebsbremspedal (15), wobei die Festellbremse im wesentlichen aus einem Bedienelement (7), einer elektronischen Steuereinheit (6), der Raddrehzahlwerte von Raddrehzahlsensoren (12, 13) zugeführt werden, mindestens einer Einheit (1) zur Erzeugung einer Zuspannkraft sowie mit durch die Einheit (1) zuspannbaren Bremseinrichtungen (4) an wenigstens einer Achse gebildet wird, wobei die elektronische Steuereinheit (6) die Einheit (1) nach Erkennen eines Anfahrvorganges des Kraftfahrzeugs im Sinne eines Lösens der Feststellbremse ansteuert, **dadurch gekennzeichnet, dass** die Steuereinheit (6) die Einheit (1) nach dem Lösen der Feststellbremse im Sinne einer Erhöhung der Zuspannkraft ansteuert, falls die Erkennung des Anfahrvorganges als fehlerhaft eingestuft wurde.

2. Verfahren nach Anspruch 1, **dadurch gekennzeichnet, dass** die Erkennung des Anfahrvorganges als fehlerhaft eingestuft wird, falls der Fahrzeugführer für eine vorbestimmte Zeitspanne (Δt) nach dem Lösevorgang der Feststellbremse keine Betätigung der Pedale (14, 15, 16) vornimmt und das Kraftfahrzeug eine Geschwindigkeit von vorzugsweise weniger als 3 km/h aufweist.

3. Verfahren nach Anspruch 1, **dadurch gekennzeichnet, dass** die Erkennung des Anfahrvorganges als fehlerhaft eingestuft wird, falls der Fahrzeugführer für eine vorbestimmte Zeitspanne (Δt) nach dem Lösevorgang der Feststellbremse keine Betätigung der Pedale (14, 15, 16) vornimmt und ein Sensor ermittelt, dass die Fahrzeugführertür des Kraftfahrzeugs geöffnet wird.

4. Verfahren nach Anspruch 1, **dadurch gekennzeichnet, dass** die Erkennung des Anfahrvorganges als fehlerhaft eingestuft wird, falls der Fahrzeugführer für eine vorbestimmte Zeitspanne (Δt) nach dem Lösevorgang der Feststellbremse keine Betätigung der Pedale (14, 15, 16) vornimmt und ein Sensor an einem Sicherheitsgurtschloss ermittelt, dass der Fahrzeugführer seinen Sicherheitsgurt geöffnet hat.

5. Verfahren nach Anspruch 1, **dadurch gekennzeichnet, dass** die Erkennung des Anfahrvorganges als fehlerhaft eingestuft wird, falls das Kraftfahrzeug eine Geschwindigkeit von vorzugsweise weniger als 3 km/h aufweist und der Fahrzeugführer die Zündung abschaltet.

6. Verfahren nach Anspruch 2 oder 5, **dadurch gekennzeichnet, dass** die Geschwindigkeit des Kraftfahrzeugs mit Hilfe der Raddrehzahlsensoren (12, 13) bestimmt wird.

7. Verfahren nach einem der Ansprüche 2 bis 4, **dadurch gekennzeichnet, dass** die vorbestimmte Zeitspanne (Δt) variabel ist und in Abhängigkeit von der Hangneigung bestimmt wird.

8. Verfahren nach Anspruch 7, **dadurch gekennzeichnet, dass** die Hangneigung mit Hilfe eines Sensors zur Neigungserkennung (17) ermittelt wird.

## Claims

1. Method for operating a parking brake, which can be activated by means of an extraneous force, for motor vehicles having a drive motor which is provided with a mechanical change speed gear mechanism, and a clutch pedal (14), an accelerator pedal (16) and a service brake pedal (15), wherein the parking brake is formed essentially from an operator control element (7), an electronic control unit (6) to which wheel speed values are fed from wheel speed sensors (12, 13), at least one unit (1) for generating a brake application force and with brake devices (4), which can be applied by the unit (1), on at least one axle, wherein the electronic control unit (6) actuates the unit (1) in the sense of releasing the parking brake after a driving-off process of the motor vehicle has been detected, **characterized in that** the control unit (6) actuates the unit (1) in the sense of increasing the brake application force after the parking brake has been released if the detection of the driving-off process has been classified as incorrect.

2. Method according to Claim 1, **characterized in that** the detection of the driving-off process is classified as incorrect if the driver of the vehicle does not activate the pedals (14, 15, 16) for a predetermined time period (Δt) after the release process of the parking brake, and the motor vehicle has a velocity of preferably less than 3 km/h.

3. Method according to Claim 1, **characterized in that** the detection of the driving-off process is classified as incorrect if the driver of the vehicle does not activate the pedals (14, 15, 16) for a predetermined time period (Δt) after the release process of the parking brake, and a sensor determines that the driver's door of the motor vehicle is opened.

4. Method according to Claim 1, **characterized in that** the detection of the driving-off process is classified as incorrect if the driver of the vehicle does not activate the pedals (14, 15, 16) for a predetermined time period (Δt) after the release process of the parking brake, and a sensor on a seatbelt lock determines that the driver of the vehicle has unfastened his seatbelt.

5. Method according to Claim 1, **characterized in that** the detection of the driving-off process is classified as incorrect if the motor vehicle has a velocity of preferably less than 3 km/h and the driver of the vehicle switches off the ignition.

6. Method according to Claim 2 or 5, **characterized in that** the velocity of the motor vehicle is determined using the wheel speed sensors (12, 13).

7. Method according to one of Claims 2 to 4, **characterized in that** the predetermined time period (Δt) is variable and is determined as a function of the inclination of the slope.

8. Method according to Claim 7, **characterized in that** the inclination of the slope is determined using an inclination-detecting sensor (17).

## Revendications

1. Procédé d'utilisation d'un frein de stationnement pouvant être actionné au moyen d'une force externe pour véhicules automobiles comprenant un moteur d'entraînement muni d'une boîte de vitesses mécanique et une pédale d'embrayage (14), une pédale d'accélérateur (16) et une pédale de frein de service (15), le frein de stationnement étant pour l'essentiel constitué d'un élément de commande (7), d'une unité de commande électronique (6) à laquelle sont acheminées des valeurs de vitesse de rotation des roues provenant de capteurs de vitesse de rotation de roue (12, 13), d'au moins une unité (1) pour générer une force d'application du frein ainsi que de dispositifs de freinage (4) pouvant être appliqués par l'unité (1) sur au moins un essieu, l'unité de commande électronique (6) commandant l'unité (1) dans le sens d'un desserrage du frein de stationnement après avoir détecté un processus de démarrage du véhicule automobile, **caractérisé en ce que** l'unité de commande (6) commande l'unité (1) après le desserrage du frein de stationnement dans le sens d'une augmentation de la force d'application du frein si la détection du processus de démarrage a été classée erronée.

2. Procédé selon la revendication 1, **caractérisé en ce que** la détection du processus de démarrage est classée erronée si le conducteur du véhicule n'actionne aucune des pédales (14, 15, 16) pendant une période de temps (Δt) prédéfinie après le desserrage du frein de stationnement et le véhicule automobile présente une vitesse de préférence inférieure à 3 km/h.

3. Procédé selon la revendication 1, **caractérisé en ce que** la détection du processus de démarrage est classée erronée si le conducteur du véhicule n'actionne aucune des pédales (14, 15, 16) pendant une période de temps (Δt) prédéfinie après le desserrage du frein de stationnement et un capteur détermine que la portière du conducteur du véhicule automobile est ouverte.

4. Procédé selon la revendication 1, **caractérisé en ce que** la détection du processus de démarrage est classée erronée si le conducteur du véhicule n'actionne aucune des pédales (14, 15, 16) pendant une période de temps (Δt) prédéfinie après le desserrage du frein de stationnement et un capteur sur un verrou de ceinture de sécurité détermine que le conducteur du véhicule a détaché sa ceinture de sécurité.

5. Procédé selon la revendication 1, **caractérisé en ce que** la détection du processus de démarrage est classée erronée si le véhicule automobile présente une vitesse de préférence inférieure à 3 km/h et le conducteur du véhicule coupe le contact.

6. Procédé selon la revendication 2 ou 5, **caractérisé en ce que** la vitesse du véhicule automobile est déterminée à l'aide de capteurs de vitesse de rotation de roue (12, 13).

7. Procédé selon l'une des revendications 2 à 4, **caractérisé en ce que** la période de temps (Δt) prédéfinie est variable et déterminée en fonction de la pente.

8. Procédé selon la revendication 7, **caractérisé en ce que** la pente est déterminée à l'aide d'un capteur de détection de l'inclinaison (17).
